# EUROPÄISCHE PATENTSCHRIFT

(11) **EP 1 279 824 B1**
(45) Veröffentlichungstag und Bekanntmachung des Hinweises auf die Patenterteilung: **06.08.2008**
(21) Anmeldenummer: 02012869.0
(22) Anmeldetag: 11.06.2002
(51) Int. Cl.: F02M 35/16

(54) **Gehäuseeinrichtung**
Housing device
Dispositif de boîtier

(30) Priorität: 23.07.2001 DE 10135779
(43) Veröffentlichungstag der Anmeldung: 29.01.2003
(73) Patentinhaber: Bayerische Motoren Werke Aktiengesellschaft, 80809 München (DE)
(72) Erfinder: Davison, Peter, 4400 Steyr (AT); Fischer, Christian, 3340 Waidhofen/Ybbs (AT); Wimmer, Rudolf, 4431 Haidershofen (AT)

(56) Entgegenhaltungen:
- EP-A- 0 899 451
- DE-A1- 19 648 273
- US-A- 5 655 795

## Beschreibung

Die Erfindung betrifft eine Gehäuseeinrichtung, wie sie beispielsweise in Form eines Luftfilter- oder Rohluftkastens Teil des Ansaugtraktes einer Kraftfahrzeug-Brennkraftmaschine bilden kann.

Aus der europäischen Patentanmeldung EP 0 899 451 A2, von der diese Erfindung ausgeht, ist eine Gehäuseeinrichtung mit einem Basiskörper und einem mit dem Basiskörper gekoppelten Durchlassstutzen zur Bereitstellung eines in einen durch die Gehäuseeinrichtung begrenzten Innenraum führenden Luftweges beschrieben. Eine Einsatzöffnung ist von dem Basiskörper begrenzt und ein Teil des Durchlassstutzens ist durch einen Einsatzkörper gebildet, der Umfangsbereich der Einsatzöffnung des Basiskörpers ist mit zueinander komplementär ausgebildeten Fügestrukturen versehen. Der Einsatzkörper und der Basiskörper sind über diese Fügestruktur miteinander gekoppelt.

Zum technischen Umfeld wird weiter auf das US-Patent US 5,655,795 hingewiesen, in der ebenfalls eine zweiteilige, miteinander verbindbare Gehäuseeinrichtung beschrieben ist.

Der Erfindung liegt die Aufgabe zugrunde, eine Gehäuseeinrichtung - insbesondere einen Rohluftkasten zu schaffen - die bzw. der sich unter werkzeug- und fertigungstechnischen Gesichtspunkten günstig herstellen lässt und sich durch eine widerstandsarme Luftführung auszeichnet.

Diese Aufgabe wird erfindungsgemäß gelöst durch eine Gehäuseeinrichtung mit einem Basiskörper und einem, mit dem Basiskörper gekoppelten Durchlassstutzen zur Bereitstellung eines, in einen durch die Gehäuseeinrichtung begrenzten Innenraum führenden Luftweges, wobei der Basiskörper eine Einsatzöffnung begrenzt und ein Teil des Durchlassstutzens durch einen Einsatzkörper gebildet ist und ein Umfangsbereich des Einsatzkörpers und ein Umfangsbereich der Einsatzöffnung des Basiskörpers mit zueinander komplementär ausgebildeten Fügestrukturen versehen sind und der Einsatzkörper und der Basiskörper über diese Fügestrukturen in abdichtender Weise gekoppelt sind. Die Fügestruktur weist einen Eingriffsfalz auf, wobei vorzugsweise an dem Basiskörper eine Aufnahmenut und an dem Einsatzkörper eine Einsatzfeder ausgebildet sind. Die Aufnahmenut und die Einsatzfeder sind derart ausgerichtet ausgebildet, dass in Einbauposition der Gehäuseeinrichtung der Einsatzkörper entlang einer im Wesentlichen vertikalen Bewegungsbahn und Fügestellung bringbar ist. In vorteilhafter Weise wird es hierbei möglich, den Einsatzkörper bereits aufgrund seines Eigengewichtes zunächst in Fügestellung zu halten.

Dadurch wird es auf vorteilhafte Weise möglich, eine Gehäuseeinrichtung zu schaffen, die einen zuverlässig abgedichtet angekoppelten Ansaugstutzen aufweist, wobei der Ansaugstutzen einen großen Durchlassquerschnitt aufweist und auf montagetechnisch günstige Weise unter Freigabe einer großflächigen Zugangsöffnung bedarfsweise entnehmbar ist.

Durch die erfindungsgemäße Ausgestaltung der Gehäuseeinrichtung ist es in weiter vorteilhafter Weise auch möglich, durch Bereitstellung unterschiedlich konfigurierter Ansaugstutzenelemente, eine große Rohluftkasten-Variantenvielfalt bereit zu halten.

Gemäß einer besonders bevorzugten Ausführungsform der Erfindung ist der Durchlassstutzen derart geteilt ausgebildet, dass ein Teilabschnitt des Durchlassstutzens durch den Basiskörper und der verbleibende Teilabschnitt des Durchlassstutzens durch einen, mit dem Einsatzkörper integral ausgebildeten Wandabschitt gebildet. Hierdurch ergibt sich, ein in werkzeugtechnischer Hinsicht besonders vorteilhafter Aufbau, sowohl eines Formwerkzeuges zur Herstellung des Einsatzkörpers, als auch zur Herstellung des Basiskörpers.

Der Einsatzkörper ist gemäß einer besonders bevorzugten Ausführungsform der Erfindung derart ausgebildet, dass dieser zumindest eine Zone eines oberen Kantenbereiches der Gehäuseeinrichtung bildet. Bei dieser Ausgestaltung ermöglicht die Einsatzöffnung einen vergleichsweise großflächigen Zugang zu dem Innenbereich der Gehäuseeinrichtung über einen Eck- bzw. Kantenbereich. In vorteilhafter Weise sind über die derart freilegbare Einsatzöffnung Fixiermittel zugänglich, über welche die erfindungsgemäße Gehäuseeinrichtung am Zylinderkopf oder Ventildeckel einer Brennkraftmaschine fixiert ist.

Das Einsatzkörper bildet gemäß einer besonders bevorzugten Ausführungsform der Erfindung einen oberen Horizontal-Wandungsabschnitt sowie einen - in Einbauposition gesehen - seitlichen Vertikal-Wandungsabschnitt. Die beiden Wandungsabschnitte sind vorzugsweise derart ausgebildet, dass diese in den Durchlass-Stutzen hinein auslaufen.

In vorteilhafter Weise ist eine Fixieranordnung vorgesehen, zur Fixierung des Einsatzkörpers an dem Basiskörper in Fügestellung. Diese Fixiereinrichtung umfasst in vorteilhafter Weise mehrere, in dem Basiskörper über eine Gewindestruktur verankerte Schraubenelemente. Diese Schraubenelemente sind vorzugsweise derart ausgerichtet, dass die durch diese aufgebrachte Schraubenkraft das Einsatzkörper in Fügerichtung gegen den Basiskörper drängt.

Die erfindungsgemäße Gehäuseeinrichtung bildet gemäß einem besonderen Aspekt der vorliegenden Erfindung einen Luftfilterkasten oder zumindest einen Teil desselben, insbesondere einen Teil des Luftfilterkastendeckels, wobei über den Durchlass-Stutzen Umgebungsluft zu einem in dem Luftfilterkasten aufgenommenen Luftfilter vordringen kann. Alternativ hierzu - oder auch in Kombination mit dieser Maßnahme ist es auch möglich, über den im Zusammenspiel des Einsatzkörpers mit dem Basiskörper gebildeten Durchlass-Stutzen, gefilterte Luft dem Einlasstrakt einer Brennkraftmaschine oder beispielsweise einem Fahrgastinnenraum zuzuleiten.

Die erfindungsgemäße Gehäuseeinrichtung ist in vorteilhafter Weise aus einem thermoplastischen Kunststoffmaterial gefertigt, das beispielsweise durch ein Tiefziehverfahren oder vorzugsweise durch ein KunststoffSpritzverfahren verarbeitet wird.

Der Durchlass-Stutzen ist gemäß einer besonders bevorzugten Ausführungsform der Erfindung derart ausgebildet, dass dieser einen im wesentlichen polygonalen Querschnitt aufweist. Hierdurch wird es möglich, bei vertretbarem Bauraumbedarf vergleichsweise großflächige Durchtrittsquerschnitte innerhalb des Durchlass-Stutzens zu realisieren.

An dem Durchlass-Stutzen ist gemäß einer besonders bevorzugten Ausführungsform der Erfindung eine Anschlussstruktur zum Anschluss eines Leitungsorgans, beispielsweise eines flexiblen Schlauchelementes vorgesehen. Diese Anschlussstruktur befindet sich vorzugsweise in einem Innenbereich des Durchlass-Stutzens. Dieses Leitungsorgang kann in vorteilhafter Weise zwischen in dem Durchlass-Stutzen fixiert, insbesondere abdichtend geklemmt sein. Diese Klemmkraft kann beim Einsetzen des Einsatztkörpers in den Basiskörper aufgebracht werden. Weitere vorteilhafte Einzelheiten der Erfindung ergeben sich aus der nachfolgenden Beschreibung in Verbindung mit der Zeichnung.

Es zeigen:
- **Fig. 1**: eine perspektivische Detailansicht einer erfindungsgemäßen Gehäuseeinrichtung mit einem, in Fügestellung in eine Einsatzöffnung eines Basiskörpers eingesetzten Einsatzkörper;
- **Fig. 2**: eine perspektivische Ansicht der erfindungsgemäßen Gehäuseeinrichtung nach Fig.1, jedoch mit in vertikaler Richtung nach oben von dem Basiskörper abgezogenen Einsatzkörper;
- **Fig. 3**: eine perspektivische Ansicht des Basiskörpers zur Erläuterung weiterer Einzelheiten der zur Koppelung des Einsatzkörpers mit dem Basiskörper vorgesehenen Fügestruktur;
- **Fig. 4**: eine perspektivische Detailansicht zur Erläuterung eines oberen Eckbereiches der erfindungsgemäß vorgesehenen Fügestruktur mit einer Aufnahmeöffnung zur Aufnahme einer Fixierschraube;
- **Fig. 5**: eine Draufsicht auf den erfindungsgemäß durch den Einsatzkörper und den Basiskörper gebildeten Durchlass-Stutzen;

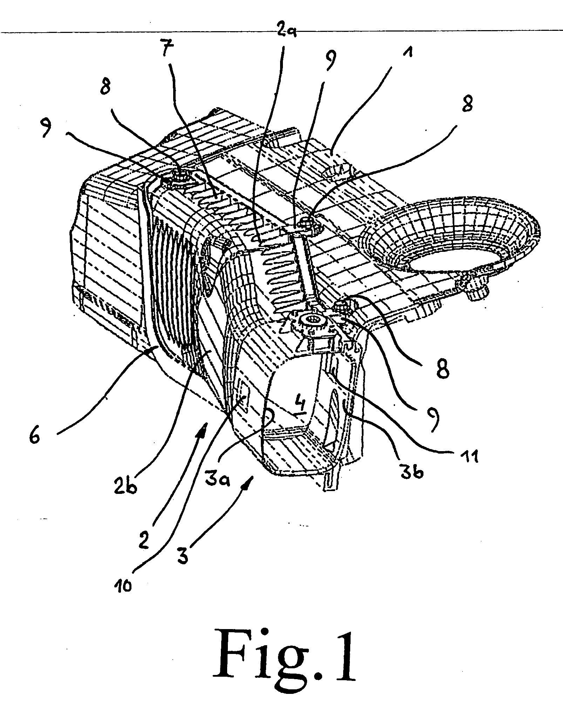

Die in Fig. 1 dargestellte Gehäuseeinrichtung bildet Teil eines Rohluftansaugabschnittes eines Luftfilterkastens einer Brennkraftmaschine. Die Gehäuseeinrichtung umfasst einen Basiskörper 1 und einen hiermit gekoppelten Einsatzkörper 2.

In einem Seitenbereich des Basiskörpers 1 ist ein Durchlass-Stutzen 3 vorgesehen, der einen in einen Innenbereich der Gehäuseeinrichtung hinein führenden Durchtrittskanal 4 begrenzt.

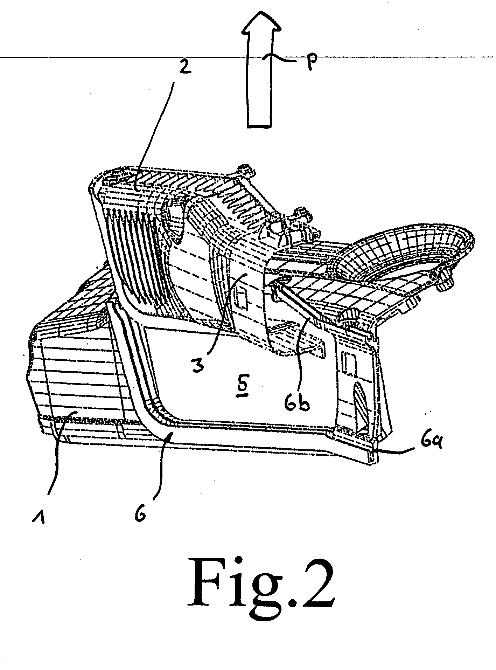

Der Einsatzkörper 2 deckt eine, an dem Basiskörper 1 ausgebildete Einsatzöffnung 5 (s. Fig. 2) ab. Die Koppelung des Basiskörpers 1 mit dem Einsatzkörper 2 erfolgt über eine Fügestruktur 6. Die Fügestruktur umfasst eine, an dem Basiskörper 1 vorgesehene Aufnahmenut und eine an dem Einsatzkörper 2 ausgebildete Einsatzfeder. Einzelheiten hierzu, werden in Verbindung mit den nachfolgenden Figuren näher erläutert.

Der Einsatzkörper 2 ist derart ausgebildet, dass dieser einen Abschnitt eines oberen Kantenbereiches der Gehäuseeinrichtung bildet. An diesen oberen Kantenbereich schließt sich ein oberer Horizontal-Wandungsabschnitt 2a und ein seitlicher Vertikal-Wandungsabschnitt 2b an. Die beiden Wandungsabschnitte 2a, 2b laufen in die Umfangswandung des Durchlass-Stutzens 3 aus. Im Bereich des oberen Horizontal-Wandungsabschnittes 2a sind mehrere Versteifungsrippen 7 ausgebildet, über welche die den Einsatzkörper 2 umsäumende Fügestruktur 6 noch weiter ausgesteift ist.

Im Bereich einer, in Einbauposition oben liegenden Horizontal-Wandung der Gehäuseeinrichtung, sind mehrere Schraubenelemente 8 vorgesehen über welche der Einsatzkörper 2 an dem Basiskörper 1 in Fügestellung fixiert ist. Die Schraubenelemente 8 sind derart ausgerichtet angeordnet, dass die durch diese auf integral mit dem Einsatzkörper 2 ausgebildete Schraubenauflageabschnitte 9 aufgebrachten Druckkräfte, im wesentlichen in Fügerichtung wirken.

Der Durchlass-Stutzen 3 ist bei dem hier dargestellten Ausführungsbeispiel geteilt ausgebildet. Der überwiegende Teil der Umfangswandung des Durchlass-Stutzens 3 (Wandungsabschnitt 3a) ist integral mit dem Einsatzkörper 2 ausgebildet. Der verbleibende Wandungsabschnitt des Durchlass-Stutzens 3 ist durch einen an den Basiskörper 1 angeformten Wandungsabschnitt 3b gebildet. Die zwischen dem Basiskörper 1 und dem Einsatzkörper 2 vorgesehene Fügestruktur 6, erstreckt sich bei dieser Ausführungsform bis in den Bereich des Durchlass-Stutzens 3 und koppelt hierbei die beiden Wandungsabschnitte 3a und 3b des Durchlass-Stutzens.

Der Durchtrittskanal 4 hat bei dem gezeigten Ausführungsbeispiel einen "polygonal-rechteckförmigen" Querschnitt. Die Fügestruktur 6 ist im Hinblick auf ihren Verlauf derart ausgebildet, dass sich die zwischen dem Einsatzkörper 2 und dem Basiskörper 1 gebildete Fügestelle in einen Innen-Eckbereich des Durchtrittskanales 4 hinein erstreckt.

An dem Durchlass-Stutzen 3 sind zwei Rastöffnungen 10, 11 ausgebildet, die mit Rastzungen in Eingriff bringbar sind, welche an einem in den Durchtrittskanal 4 einsteckbaren Schlauchelement (nicht dargestellt) ausgebildet sind.

In Fig. 2 ist die erfindungsgemäße Gehäuseeinrichtung in einem Zustand gezeigt in welchem der Einsatzkörper 2 von dem Basiskörper 1 abgenommen ist. Zum Abnehmen des Einsatzkörpers 2 von dem Basiskörper 1, wird dieser wie durch das Pfeilsymbol P angedeutet, in vertikaler Richtung nach oben aus der seitens des Basiskörpers 1 vorgesehenen Aufnahmenut 6a der Fügestruktur 6 abgezogen. Der im Zusammenspiel des Basiskörpers 1 mit dem Einsatzkörper 2 gebildete Durchlass-Stutzen 3 ist in diesem Zustand zerlegt. Es ist möglich, die beiden Teile 1, 2 derart auszubilden, dass das Abziehen des Einsatzkörpers 2 von dem Basiskörper 1 erst möglich wird, wenn die zum Einsatz in den Durchlass-Stutzen 3 vorgesehene Schlauchleitung aus dem Durchlass-Stutzen 3 herausgezogen ist. Die in den Durchlass-Stutzen 3 eingefügte Schlauchleitung bildet bei einer derartigen Variante ein weiteres Verriegelungsorgan das den Einsatzkörper 2 und den Basiskörper 1 in Fügestellung fixiert. Alternativ hierzu ist es jedoch (wie bei dem gezeigten Ausführungsbeispiel realisiert) die Schlauchleitung in dem Durchlass-Stutzen 3 zu klemmen.

Die durch die Fügestruktur 6 seitens des Basiskörpers 1 bereitgestellte Aufnahmenut 6a, erstreckt sich entlang eines unteren Randbereiches der Einsatzöffnung 5 und steigt auf einer, dem Durchlass-Stutzen 3 abgewandten Seite der Einsatzöffnung 5, in einen oberen Bereich des Basiskörpers 1 auf und erstreckt sich in Form eines im wesentlichen horizontal verlaufenden Nutabschnittes 6b wieder bis zum Durchlass-Stutzen 3 zurück.

Der, auf der dem Durchlass-Stutzen 3 abgewandten Seite der Einsatzöffnung 5 vorgesehene aufsteigende Abschnitt der Aufnahmenut 6a, bildet eine Führungseinrichtung durch welche der Einsatzkörper 2 auf zuverlässige Weise in vertikaler Richtung in seine Einsatzposition geführt wird.

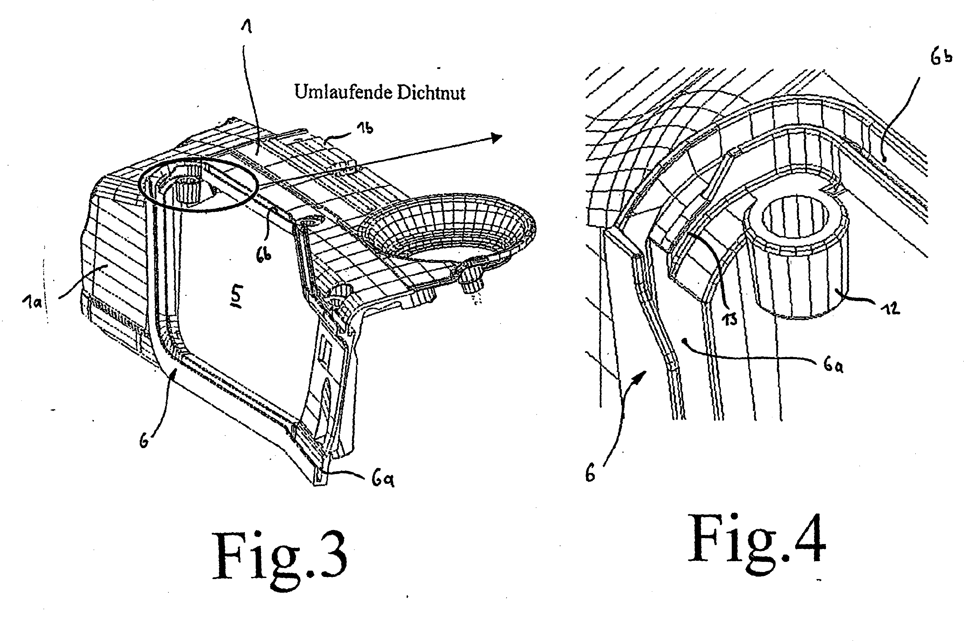

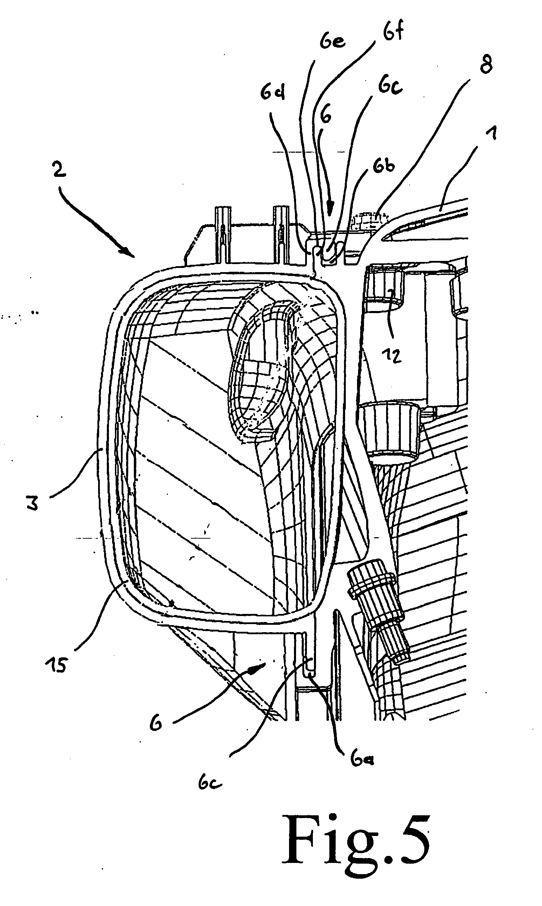

In Fig. 3 ist der Basiskörper 1, ohne dem zum Einsatz in die Einsatzöffnung 5 vorgesehenen Einsatzkörper 2 (Fig. 1 und 2), dargestellt. Erkennbar ist in dieser Ansicht, insbesondere der Verlauf der Aufnahmenut 6a, der zur Ankoppelung des Einsatzkörpers 2 an den Basiskörper 1 vorgesehenen Fügestruktur 6. Die Aufnahmenut 6a ist als umlaufende Dichtnut ausgebildet, welche eine seitens des Einsatzkörpers 2 vorgesehene Einsatzfeder 6b (Fig. 5) in abdichtender Weise aufnimmt. Der im unteren Bereich der Einsatzöffnung 5 verlaufende Abschnitt der Aufnahmenut 6a ist derart ausgebildet, dass dieser mit der seitens des Einsatzkörpers 2 vorgesehenen Einsatzfeder 6c in Eingriff gelangt, bevor diese mit der im oberen Bereich der Einsatzöffnung 5 vorgesehen Aufnahmenut 6b in Eingriff tritt.

Die Einsatzöffnung 5 ist derart ausgebildet, dass ein Teilabschnitt der Fügestruktur 6 entlang einer im wesentlichen vertikal ausgerichteten Seitenwand 1a des Basiskörpers 1 verläuft und ein zweiter Teilabschnitt der Fügestruktur 6 (insbesondere die obere Aufnahmenut 6b) entlang einer oberen, im wesentlichen horizontalen Deckfläche 1b des Basiskörpers 1 verläuft.

In Fig. 4 ist in Form einer Detailansicht ein Eck-Übergangsbereich der Fügestruktur 6 dargestellt. Erkennbar ist in dieser Ansicht, wie eine, im wesentlichen vertikal ausgerichtete Seitenwand der Aufnahmenut 6a, in eine Bodenfläche der oberen Aufnahmenut 6b übergeht.

In diesem Eck-Bereich ist weiterhin ein Befestigungsabschnitt 12 ausgebildet, in welchen das in Figur 1 erkennbare Schraubenelement 8 einschraubbar ist. Der Befestigungsabschnitt 12 ist integral mit dem Basiskörper 1 ausgebildet. Die Geometrie des Basiskörpers 1 ist insbesondere in diesem Eck-Bereich derart abgestimmt, dass sich bezogen auf die Einsatzrichtung des Einsatzkörpers 2 an dem Basiskörper 1 kein Hinterschnitt ergibt, so dass dieser aus einem zweiteiligen Formwerkzeug entformbar ist.

In dem Übergangsbereich zwischen der Aufnahmenut 6a und der Aufnahmenut 6b ist ein Stufenabschnitt 13 ausgebildet, durch welchen eine noch weiter verbesserte Dichtwirkung der Fügestruktur 6 erreicht wird. Zur Bereitstellung dieses Stufenabschnitts 13, fällt ein Teil der aus der Seitenwandung der unteren Aufnahmenut 6a abbiegenden Wandung unter das Höhenniveau der Bodenfläche der oberen Aufnahmenut 6b ab.

Fig. 5 zeigt eine Ansicht der erfindungsgemäßen Gehäuseeinrichtung aus welcher eine bevorzugte Querschnittsform des Durchlass-Stutzens 3 hervorgeht. Der Durchlasstutzen 3 weist einen von vier stärker gekrümmten Eck-Zonen begrenzten polygonal-rechteckförmigen Querschnitt auf. Die zur Ankoppelung des Einsatzkörpers 2 an den Basiskörper 1 vorgesehene Fügestruktur 6 ist hier im Querschnitt erkennbar. In die im oberen Bereich der Gehäuseeinrichtung vorgesehene obere Aufnahmenut 6b greift die einstückig mit dem Einsatzkörper 2 ausgebildete Einsatzfeder 6c in abdichtender Weise ein. Die Einsatzfeder 6c bildet gemeinsam mit einem weiteren Wandungsabschnitt 6d des Einsatzkörpers 2 einen weiteren Nutabschnitt 6e, in welchen eine die Aufnahmenut 6b begrenzende Wandung 6f eingreift. Eine zwischen den beiden Wandungen 6d und 6f gebildete Stoßstelle, verläuft in einem oberen Eck-Bereich des Durchlass-Stutzens 3. Die im unteren Bereich des Durchlass-Stutzens 3 ausgebildete Einsatzfeder 6c greift in abdichtender Weise in die an dem Basiskörper 1 ausgebildete Aufnahmenut 6a ein. Durch die Schraubenelemente 8 werden der Einsatzkörper 2 und der Basiskörper 1 in Fügestellung gehalten. Zur Verankerung der Schraubenelemente 8 in dem Basiskörper 1, sind nahe der Fügestruktur 6, mehrere Befestigungsabschnitte 12 ausgebildet.

In den Durchlass-Stutzen 3 ist ein Endabschnitt eines Luftleitungsorgans 15 in abdichtender Weise eingesteckt. Das Luftleitungsorgan ist vorzugsweise ebenfalls aus einem thermoplastischen Kunststoffmaterial gefertigt und mit einer Faltenbalgstruktur versehen, durch welche eine Einleitung äußerer Kräfte in den Durchlass-Stutzen 3 über das Luftleitungsorgan 15 weitgehend vermieden ist.

Obgleich die vorliegende Erfindung vorangehend in Verbindung mit einem Luftfilterkastendeckel beschrieben wurde, ist die Erfindung nicht auf derartige Einsatzformen beschränkt. Beispielsweise ist es auch möglich, die erfindungsgemäße Gehäuseeinrichtung für anderweitige Luftleitungssysteme, insbesondere für Luftleitungssysteme zur Reinigung oder Klimatisierung der Luft im Fahrgastraum zu verwenden.

## Patentansprüche

1. Gehäuseeinrichtung mit
➢ einem Basiskörper (1) und
➢ einem, mit dem Basiskörper (1) gekoppelten Durchlassstutzen (3) zur Bereitstellung eines, in einen durch die Gehäuseeinrichtung begrenzten Innenraum führenden Luftweges,
➢ wobei der Basiskörper (1) eine Einsatzöffnung begrenzt und ein Teil des Durchlassstutzens (3) durch einen Einsatzkörper (2) gebildet ist und ein Umfangsrandbereich des Einsatzkörpers (2) und ein Umfangsrandbereich der Einsatzöffnung des Basiskörpers (1) mit zueinander komplementär ausgebildeten Fügestrukturen (6) versehen sind und der Einsatzkörper (2) und der Basiskö rper (1) über diese Fügestruktur (6) gekoppelt sind,
**dadurch gekennzeichnet, dass** die Fügestruktur (6) einen Eingriffsfalz umfasst und dass an dem Basiskörper (1) eine Aufnahmenut (6a) und an dem Einsatzkörper (2) eine Einsatzfeder (6c) ausgebildet sind.

2. Gehäuseeinrichtung nach Anspruch 1,
**dadurch gekennzeichnet, dass** der Durchlassstutzen (3) geteilt ausgebildet ist und ein Wandungsabschnitt (3b) des Durchlassstutzens (3) durch den Basiskörper (1) gebildet ist.

3. Gehäuseeinrichtung nach einem der Ansprüche 1 oder 2,
**dadurch gekennzeichnet, dass** die Aufnahmenut (6a) und die Einsatzfeder (6b) derart ausgebildet sind, dass in Einbauposition der Gehäuseeinrichtung der Einsatzkörper (2) entlang einer im Wesentlichen vertikalen Bewegungsbahn in Fügestellung bringbar ist.

4. Gehäuseeinrichtung nach wenigstens einem der Ansprüche 1 bis 3,
**dadurch gekennzeichnet, dass** der Einsatzkörper (2) einen Abschnitt eines oberen Kantenbereiches der Gehäuseeinrichtung bildet.

5. Gehäuseeinrichtung nach wenigstens einem der Ansprüche 1 bis 4,
**dadurch gekennzeichnet, dass** der Einsatzkörper (2) einen oberen Horizontal-Wandungsabschnitt (2a) und einen seitlichen Vertikal-Wandungsabschnitt (2b) umfasst.

6. Gehäuseeinrichtung nach wenigstens einem der Ansprüche 1 bis 5,
**dadurch gekennzeichnet, dass** der obere Horizontal-Wandungsabschnitt (2a) und der seitliche Vertikal-Wandungsabschnitt (2b) in den Durchlassstutzen (3) auslaufen.

7. Gehäuseeinrichtung nach wenigstens einem der Ansprüche 1 bis 6,
**dadurch gekennzeichnet, dass** eine Fixiereinrichtung vorgesehen ist, zur Fixierung des Einsatzkörpers (2) und des Basiskörpers (1) in Fügestellung.

8. Gehäuseeinrichtung nach wenigstens einem der Ansprüche 1 bis 7,
**dadurch gekennzeichnet, dass** diese Teil eines Luftfilterkastens bildet.

9. Gehäuseeinrichtung nach Anspruch 8,
**dadurch gekennzeichnet, dass** diese als Luftfilterkastendeckel ausgebildet ist.

10. Gehäuseeinrichtung nach wenigstens einem der Ansprüche 1 bis 9,
**dadurch gekennzeichnet, dass** diese aus einem thermoplastischen Kunststoffmaterial gefertigt ist.

11. Gehäuseeinrichtung nach wenigstens einem der Ansprüche 1 bis 10,
**dadurch gekennzeichnet, dass** der Durchlassstutzen (3) einen im Wesentlichen polygonalen Querschnitt aufweist.

12. Gehäuseeinrichtung nach wenigstens einem der Ansprüche 1 bis 11,
**dadurch gekennzeichnet, dass** der Durchlassstutzen (3) mit einer Anschlussstruktur versehen ist, zum Anschluss eines Leitungsorganes (15).

## Claims

1. A casing device comprising
a base member (1) and
an outlet nozzle (3) coupled to the base member (1) in order to form an air channel leading into an internal space bounded by the casing device,
wherein the base member (1) bounds an insertion opening and a part of the nozzle (3) is in the form of an insert (2), and a peripheral edge region of the insert (2) and a peripheral edge region of the opening of the base member (1) are provided with complementary joint-forming structures (6), and the insert (2) and the base member (1) are coupled via the said structures (6),
**characterised in that** the structure (6) has an engagement rebate, notch or the like and a receiving groove (6a) is formed on the base member (1) and an insertion spring (6c) is formed on the insert (2).

2. A casing device according to claim 1,
**characterised in that** the nozzle (3) is divided, and a wall portion (3b) of the nozzle (3) is formed by the base member (1).

3. A casing device according to claim 1 or claim 2,
**characterised in that** the groove (6a) and the spring (6b) are shaped so that when the casing device is in the installation position the insert (2) can be moved along a substantially vertical path into the joining position.

4. A casing device according to at least one of claims 1 to 3,
**characterised in that** the insert (2) forms part of a top edge region of the casing device.

5. A casing device according to at least one of claims 1 to 4,
**characterised in that** the insert (2) has a top horizontal wall portion (2a) and a lateral vertical wall portion (2b).

6. A casing device according to at least one of claims 1 to 5,
**characterised in that** the top horizontal wall portion (2a) and the lateral vertical wall portion (2b) terminate in the nozzle (3).

7. A casing device according to at least one of claims 1 to 6,
**characterised in that** a fixing device is provided for fixing the insert (2) and the base member (1) in the joined position.

8. A casing device according to at least one of claims 1 to 7,
**characterised in that** the said part forms an air filter box.

9. A casing device according to claim 8,
**characterised in that** the device forms an air filter box cover.

10. A casing device according to at least one of claims 1 to 9,
**characterised in that** it is made of a thermoplastic material.

11. A casing device according to any of claims 1 to 10,
**characterised in that** the nozzle (3) has a substantially polygonal cross-section.

12. A casing device according to at least one of claims 1 to 11,
**characterised in that** the nozzle (3) has a connecting structure for connecting a transmission means (15).

## Revendications

1. Installation de boîtier comprenant
- un corps de base (1) et
- un ajutage de passage (3) couplé au corps de base (1) pour réaliser un chemin d'air traversant le volume intérieur délimité dans l'installation de boîtier,
le corps de base (1) délimitant un orifice d'insertion et une partie de l'ajutage de passage (3) est formée par un organe rapporté (2) et une zone de bord périphérique de l'orifice d'insertion du corps de base (1) est munie de structures d'assemblage (6) complémentaires et l'organe rapporté (2) et le corps de base (1) sont couplés par cette structure d'assemblage (6),
**caractérisée en ce que**
la structure d'assemblage (6) comprend une feuillure et le corps de base (1), une rainure de réception (6a) et l'organe rapporté (2) comporte une languette rapportée (6c).

2. Installation de boîtier selon la revendication 1,
**caractérisée en ce que**
l'ajutage de passage (3) est réalisé de façon divisée et un segment de paroi (3b) de l'ajutage de passage (3) est formé par le corps de base (1).

3. Installation de boîtier selon l'une des revendications 1 ou 2,
**caractérisée en ce que**
la rainure de réception (6a) et la languette rapportée (6b) sont réalisées pour qu'en position de montage de l'installation de boîtier, l'organe rapporté (2) se place en position d'assemblage suivant une trajectoire pratiquement verticale.

4. Installation de boîtier selon au moins l'une des revendications 1 à 3,
**caractérisée en ce que**
l'organe rapporté (2) forme un segment d'une zone supérieure d'arête de l'installation de boîtier.

5. Installation de boîtier selon au moins l'une des revendications 1 à 4,
**caractérisée en ce que**
l'organe rapporté (2) comporte un segment de paroi frontale supérieure (2a) et un segment de paroi verticale latérale (2b).

6. Installation de boîtier selon au moins l'une des revendications 1 à 5,
**caractérisée en ce que**
le segment de paroi horizontale supérieure (2a) et le segment de paroi latérale verticale (2b) se terminent dans l'ajutage de passage (3).

7. Installation de boîtier selon au moins l'une des revendications 1 à 6,
**caractérisée par**
une installation de fixation pour bloquer l'organe rapporté (2) et l'organe de base (1) en position d'assemblage.

8. Installation de boîtier selon au moins l'une des revendications 1 à 7,
**caractérisée en ce que**
cette pièce constitue un caisson de filtre à air.

9. Installation de boîtier selon au moins la revendication 8,
**caractérisée en ce qu'**
elle est réalisée comme couvercle de caisson de filtre à air.

10. Installation de boîtier selon au moins l'une des revendications 1 à 9,
**caractérisée en ce qu'**
elle est réalisée en matière thermoplastique.

11. Installation de boîtier selon au moins l'une des revendications 1 à 10,
**caractérisée en ce que**
l'ajutage de passage (3) a une section pratiquement polygonale.

12. Installation de boîtier selon au moins l'une des revendications 1 à 11,
**caractérisée en ce que**
l'ajutage de passage (3) est muni d'une structure de raccordement pour être raccordé à un organe de guidage (15).
